# FASCICULE DE BREVET EUROPEEN

(11) **EP 2 794 478 B1**
(45) Date de publication et mention de la délivrance du brevet: **08.06.2016**
(21) Numéro de dépôt: 12816732.7
(22) Date de dépôt: 19.12.2012
(51) Int. Cl.: C01B 33/152, C01B 33/158, C01B 33/38

(54) **PROCÉDÉ DE PRÉPARATION D'UN HYDROGEL COMPRENANT DES PARTICULES MINÉRALES SILICO-MÉTALLIQUES ET HYDROGEL AINSI OBTENU**
VERFAHREN ZUR HERSTELLUNG EINES SILICIUM-METALL-MINERALTEILCHEN ENTHALTENDEN HYDROGELS UND DAMIT HERGESTELLTE HYDROGELE
METHOD FOR PREPARING A HYDROGEL COMPRISING SILICO-METALLIC MINERAL PARTICLES AND HYDROGEL THUS OBTAINED

(30) Priorité: 22.12.2011 FR 1104027
(43) Date de publication de la demande: 29.10.2014
(73) Titulaire: Centre National de la Recherche Scientifique (CNRS), 75794 Paris Cedex 16 (FR); Université Paul Sabatier Toulouse III, 31400 Toulouse (FR)
(72) Inventeur: LE ROUX, Christophe, F-31290 Avignonet Lauragais (FR); MARTIN, François, F-31570 Sainte Foy D'aigrefeuille (FR); MICOUD, Pierre, F-31390 Peyssies (FR); DUMAS, Angela, F-31320 Pechabou (FR)
(74) Mandataire: Cabinet BARRE LAFORGUE & associés
(86) Numéro de dépôt international: PCT/FR2012/052994
(87) Numéro de publication internationale: WO 2013/093339

(56) Documents cités:
- WO-A2-2008/009799
- CHABROL K ET AL: "Functionalization of synthetic talc-like phyllosilicates by alkoxyorganosilane grafting", JOURNAL OF MATERIALS CHEMISTRY 20101121 ROYAL SOCIETY OF CHEMISTRY GBR, vol. 20, no. 43, 21 novembre 2010 (2010-11-21), pages 9695-9706, XP002683079, DOI: DOI:10.1039/C0JM01276A
- GALLEGO ET AL.: "Synthesis of new lamellar inorganic-organic talc-hybrids", NEW JOURNAL OF CHEMISTRY, vol. 32, 2008, pages 407-412, XP002683080,

## Description

L'invention concerne un procédé de préparation d'un hydrogel comprenant des particules minérales silico-métalliques.

En particulier, l'invention concerne un procédé de préparation d'un hydrogel comprenant des particules minérales du type hybrides organiques-inorganiques.

Le document WO2008/009799 décrit la préparation d'un gel silicométallique hydraté ayant pour formule chimique Si₄Mg₃O₁₁, n'H₂O (ou Si₄Mg₃O₁₁, n'H₂O) obtenu par une réaction entre une solution de métasilicate de sodium avec une solution de chlorure de magnésium (ou de nickel).

Dans tout le texte, on désigne par « particule minérale » toute particule inorganique, qui ne contient pas de carbone, ou qui n'en contient, le cas échéant, que sous forme de carbonate ou de cyanure.

De tels hybrides organiques-inorganiques présentent un intérêt croissant dans divers domaines de la chimie, notamment dans le domaine de la catalyse, de part leur capacité à combiner certains avantages des composés organiques et des composés inorganiques. La création d'interactions fortes entre des composés organiques et inorganiques permet une immobilisation durable d'espèces organiques sur des composés inorganiques, procurant aux espèces organiques l'ordre structural des composés inorganiques.

Il est connu de fonctionnaliser des phyllosilicates (silicates lamellaires) tels que le talc par greffage d'alcoxyorganosilanes. Cependant, les matériaux hybrides organiques-inorganiques ainsi obtenus ne permettent pas d'atteindre des taux de greffage satisfaisants.

Comme autre alternative à la préparation d'hybrides organiques-inorganiques, on connait également des méthodes de synthèses directes de tels matériaux par voie sol-gel. De telles synthèses par voie sol-gel ne peuvent en général pas être réalisées en milieu aqueux.

Dans ce contexte, l'invention vise à proposer un procédé permettant de préparer un hydrogel comprenant des particules minérales synthétiques silico-métalliques dont les propriétés structurales se rapprochent des phyllosilicates et/ou pouvant servir de précurseur de phyllosilicates.

L'invention vise à proposer un procédé amélioré de préparation d'un hydrogel comprenant des particules minérales synthétiques silico-métalliques de type hybrides organiques-inorganiques.

L'invention vise également à proposer un procédé permettant de préparer un hydrogel comprenant des particules minérales synthétiques silico-métalliques en milieu aqueux.

L'invention vise également à proposer un procédé permettant de préparer un hydrogel pouvant être utilisé comme support de liquide ionique (SIL) par exemple dans le domaine de la catalyse.

L'invention vise également à proposer un procédé de préparation d'un hydrogel comprenant des particules minérales silico-métalliques permettant de moduler le caractère hydrophile ou hydrophobe desdites particules minérales silico-métalliques.

L'invention vise à proposer un tel procédé dont la mise en oeuvre est simple, rapide, compatible avec les contraintes d'une exploitation industrielle, et ne produisant pas de rejets de composés chimiques polluants.

L'invention vise également à proposer un hydrogel tel que mentionné ci-dessus.

Pour ce faire, l'invention concerne un procédé de préparation d'un hydrogel comprenant des particules minérales silico-métalliques de formule (Si*ₓ*(Si-A)*₁₋ₓ*)₄M₃O₁₁, n'H₂O dans laquelle :
- x est un nombre réel de l'intervalle [0,75 ; 1[,
- A désigne un groupement choisi parmi un méthyle et les groupements hydrocarbonés comprenant au moins un hétéroatome,
- M est un métal choisi dans le groupe formé du magnésium, du cobalt, du zinc, du cuivre, du manganèse, du fer, du nickel et du chrome,
- n' est relatif à un nombre de molécule(s) d'eau associée(s) audit hydrogel,
dans lequel on réalise une réaction de co-précipitation en milieu aqueux entre :
- au moins un sel métallique dudit métal M,
- du métasilicate de sodium Na₂OSiO₂, et
- au moins un oxysilane soluble dans l'eau et ayant pour formule (I): 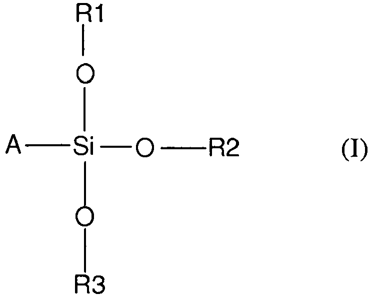 dans laquelle R1, R2 et R3, sont identiques ou différents, et choisis parmi un hydrogène et les groupements alkyles linéaires comprenant 1 à 3 atome(s) de carbone.

Contre toute attente, les inventeurs ont constaté qu'il est possible de préparer un hydrogel comprenant des particules minérales synthétiques silico-métalliques présentant des groupements hydrocarbonés par une simple réaction de précipitation entre un sel métallique et, à titre de sources de silicium, d'une part, une source de silicium minérale : du métasilicate de sodium et, d'autre part, un oxysilane (en particulier un trialcoxysilane ou un trihydroxysilane) soluble dans le milieu réactionnel comprenant ledit sel métallique et ledit métasilicate de sodium.

Avantageusement et selon l'invention, ladite réaction de précipitation est réalisée en milieu aqueux. Ainsi, la préparation dudit hydrogel ne nécessite pas l'utilisation de solvants organiques dangereux pour l'homme ou l'environnement mais peut être réalisée de façon tout à fait avantageuse en milieu aqueux. En particulier, ledit oxysilane utilisé dans un procédé selon l'invention présente une solubilité totale en milieu aqueux.

Avantageusement et selon l'invention, le groupement A a pour formule (II) : 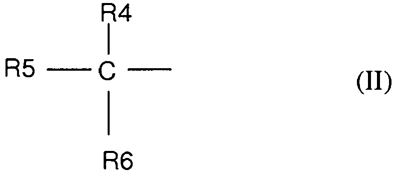 dans laquelle R4, R5 et R6, sont identiques ou différents, et choisis parmi H- et les groupements hydrocarbonés comprenant au moins un hétéroatome. En particulier, dans la formule (II), au moins deux des groupements R4, R5 et R6 sont des hydrogènes H-et le troisième est un hydrogène H- également ou un groupement hydrocarboné comprenant au moins un hétéroatome.

Avantageusement et selon l'invention, dans la formule (I), A est choisi parmi un méthyle et les groupements hydrocarbonés de formule Y-[CH₂]ₙ- dans laquelle :
- Y est un groupement comprenant au moins un atome d'azote,
- n est un nombre entier compris entre 3 et 11.

Avantageusement et selon l'invention, n est un nombre entier compris entre 3 et 11, et en particulier entre 3 et 5.

En outre, avantageusement et selon l'invention, Y est choisi parmi H₂N- et 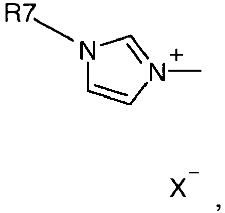 dans laquelle :
- R7 est choisi parmi les groupements alkyles linéaires comprenant 1 à 18 atome(s) de carbone,
- X⁻ est un anion dans lequel X est choisi parmi le chlore, l'iode et le brome.

Avantageusement et selon l'invention, R7 est choisi parmi les groupements alkyles linéaires comprenant 1 à 18 atome(s) de carbone, notamment 1 à 10 atome(s) de carbone et en particulier 1 à 4 atome(s) de carbone.

Avantageusement, Y est un groupement cationique soluble en milieu aqueux et contribue à conférer un caractère hydrosoluble audit oxysilane.

Plus particulièrement, R1, R2 et R3 représentent chacun des groupements méthyles (-CH₃) ou éthyles (-CH₂-CH₃). Ainsi, avantageusement et selon l'invention, ledit oxysilane a pour formule : 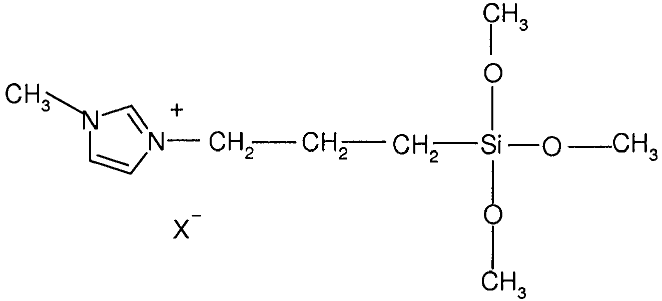 dans laquelle X⁻ est un anion dans lequel X est choisi parmi le chlore, l'iode et le brome. Dans ce cas, l'oxysilane (un trialcoxysilane) est un sel de 1-(triméthoxy-silyl-propyl)-3-méthyl-imidazolium.

Avantageusement et selon l'invention, ledit sel métallique, ledit métasilicate de sodium et ledit oxysilane sont mis en présence de façon à ce que le rapport atomique entre le métal M et le silicium soit sensiblement égal à 0,75. Un tel rapport atomique entre le métal M et le silicium correspond au rapport atomique d'un minéral tel que le talc dans lequel le métal M est le magnésium. De cette façon, on obtient par exemple un hydrogel comprenant des particules minérales synthétiques silico-métalliques présentant la stoechiométrie du talc (4 atomes de silicium pour 3 atomes de magnésium). En d'autres termes, lesdites particules minérales synthétiques silico-métalliques selon l'invention comprennent 4 atomes de silicium pour 3 atomes de métal M.

En outre, avantageusement et selon l'invention, le rapport molaire entre ledit oxysilane et ledit métasilicate de sodium est compris entre 0,10 et 0,34. Le rapport molaire entre ledit oxysilane et ledit métasilicate de sodium correspond au nombre de moles d'oxysilane(s) sur le nombre de moles de métasilicate de sodium mis en présence dans le milieu de co-précipitation de l'hydrogel.

Ainsi, avantageusement et selon l'invention, le pourcentage atomique d'oxysilane par rapport au nombre de mole total de silicium (métasilicate de sodium et oxysilane(s)) est compris entre 0,1 % et 25%. De cette façon, on obtient une composition comprenant des particules minérales synthétiques silico-métalliques pouvant présenter des groupements hydrocarbonés en diverses proportions et en particulier pouvant contenir jusqu'à 25 % d'atomes de silicium liés de façon covalente à un groupement organique, notamment un groupement de formule A.

Tout sel métallique du magnésium, du cobalt, du zinc, du cuivre, du manganèse, du fer, du nickel et/ou du chrome peut être utilisé dans un procédé selon l'invention. En particulier, avantageusement et selon l'invention, ledit sel métallique est choisi parmi les chlorures métalliques de formule MCl₂ et les acétates métalliques de formule M(CH₃COO)₂, M pouvant être choisi dans le groupe formé du magnésium, du cobalt, du zinc, du cuivre, du manganèse, du fer, du nickel et du chrome. Préférentiellement, ledit sel métallique est choisi parmi MgCl₂, CoCl₂, ZnCl₂, CuCl₂, MnCl₂, FeCl₂, NiCl₂, CrCl₂ et Mg(CH₃COO)₂, Co(CH₃COO)₂, Zn(CH₃COO)₂, Cu(CH₃COO)₂, Mn(CH₃COO)₂, Ni(CH₃COO)₂ et Cr(CH₃COO)₂.

Avantageusement et selon l'invention, consécutivement à ladite réaction de précipitation, on réalise un échange au moins partiel de l'anion X⁻ par au moins une espèce anionique choisie parmi un ion bromure Br⁻, un ion iodure I⁻, un anion bis-trifluorométhanesulfonamide, un anion trifluorométhanesulfonate, un anion hexafluorophosphate, un anion tétrafluoroborate, un anion tétrachloroaluminate, un anion acétate, un anion hydroxyde HO⁻, un anion nitrate NO³⁻ ou encore un anion nitrite NO²⁻. Un tel échange par métathèse permet de moduler à façon le caractère plus ou moins hydrophile ou hydrophobe des particules minérales synthétiques silico-métalliques préparées. L'anion bis-trifluorométhanesulfonamide présente par exemple un important caractère hydrophobe.

Avantageusement et selon l'invention, dans le cas où on utilise un trialcoxysilane, on peut également procéder à un tel échange au moins partiel dès le début, c'est-à-dire avant de réaliser ladite réaction de co-précipitation en ajoutant un tel anion dans le milieu de co-précipitation de départ.

Avantageusement et selon l'invention, on ajoute, dans le milieu réactionnel de co-précipitation, au moins un acide choisi parmi l'acide chlorhydrique (HCl) et l'acide acétique (CH₃COOH), le nombre total de moles d'ions chlorures et d'ions acétate étant égal au nombre de moles de sodium Na dans ledit milieu réactionnel de co-précipitation.

Dans une variante de réalisation selon l'invention, on réalise ladite réaction de co-précipitation de l'hydrogel en présence d'un sel additionnel, notamment un sel de même nature chimique que le(s) sel(s) présent(s) dans le milieu de co-précipitation de l'hydrogel, après précipitation d'au moins une partie dudit hydrogel. Ainsi, on ajoute par exemple dans le milieu réactionnel de co-précipitation de l'hydrogel, du chlorure de sodium (NaCl) ou encore un sel carboxylate de formule R₈-COOM' dans laquelle :
- M' désigne un métal choisi dans le groupe formé de Na et K, et
- R₈ est choisi parmi H et les groupements alkyles comprenant moins de 5 atomes de carbone.

La présence d'au moins un tel sel additionnel permet de favoriser la réaction de co-précipitation de l'hydrogel et améliore l'organisation atomique de l'hydrogel.

Avantageusement et selon l'invention, la concentration en sel(s) additionnel(s) dans le milieu réactionnel de co-précipitation de l'hydrogel est inférieure à 5 mol/L par exemple comprise entre 0,2 mol/L et 4 mol/L.

L'invention s'étend à un hydrogel obtenu par un procédé selon l'invention.

L'invention concerne donc également un hydrogel comprenant des particules minérales silico-métalliques de formule (Si*ₓ*(Si-A)*₁₋ₓ*)₄M₃O₁₁, n'H₂O dans laquelle :
- x est un nombre réel de l'intervalle [0,75 ; 1[,
- A désigne un groupement choisi parmi un méthyle et les groupements hydrocarbonés comprenant au moins un hétéroatome,
- M est un métal choisi dans le groupe formé du magnésium, du cobalt, du zinc, du cuivre, du manganèse, du fer, du nickel et du chrome,
- n' est relatif à un nombre de molécule(s) d'eau associée(s) audit gel silico/germano-métallique.

L'invention concerne en outre un procédé et un hydrogel caractérisés en combinaison par tout ou partie des caractéristiques mentionnées ci-dessus ou ci-après.

D'autres buts, avantages et caractéristiques de l'invention apparaissent à la lecture de la description et des exemples qui suivent.

### A/ - PROTOCOLE GENERAL DE PRÉPARATION D'UN HYDROGEL COMPRENANT DES PARTICULES MINÉRALES SYNTHÉTIQUES SILICO-MÉTALLIQUES SELON L'INVENTION

### 1/ - Préparation d'un hydrogel comprenant des particules minérales synthétiques silico-métalliques

Un tel hydrogel comprenant des particules minérales silico-métalliques peut être préparé par une réaction de co-précipitation en milieu aqueux impliquant, à titre de réactifs :
- au moins un sel d'un métal M choisi dans le groupe formé du magnésium, du cobalt, du zinc, du cuivre, du manganèse, du fer, du nickel et du chrome,
- du métasilicate de sodium Na₂OSiO₂, et
- au moins un oxysilane soluble dans l'eau et ayant pour formule (I): 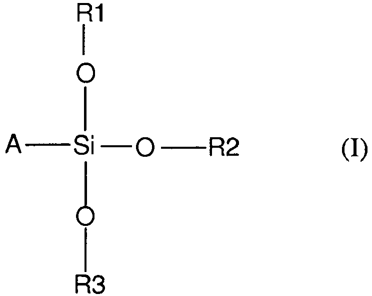 dans laquelle :
   - A désigne un groupement choisi parmi un méthyle et les groupements hydrocarbonés comprenant au moins un hétéroatome,
   - R1, R2 et R3, sont identiques ou différents, et choisis parmi un hydrogène et les groupements alkyles linéaires comprenant 1 à 3 atome(s) de carbone.

En particulier, ledit oxysilane peut être un trialcoxysilane soluble en milieu aqueux et de formule suivante : 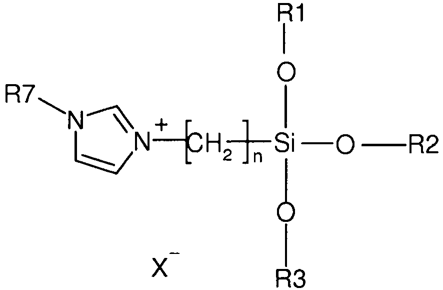 dans laquelle :
- R1, R2 et R3, sont identiques ou différents, et choisis parmi les groupements alkyles linéaires comprenant 1 à 3 atome(s) de carbone,
- R7 est choisi parmi les groupements alkyles linéaires comprenant 1 à 18 atome(s) de carbone,
- n est un nombre entier compris entre 1 et 5, et
- X⁻ est un anion dans lequel X est choisi parmi le chlore, l'iode et le brome.

Cette réaction de coprécipitation entre le(s) sel(s) du(/des) métal(/métaux) M, le métasilicate de sodium et l'oxysilane (trihydroxysilane ou trialcoxysilane) hydrosoluble est mise en oeuvre de façon à ce que le rapport atomique entre le métal M et le silicium soit sensiblement égal à 0,75. Elle permet d'obtenir une composition comprenant des particules minérales synthétiques silico-métalliques ayant la stoechiométrie du talc (4 Si pour 3 M).

Cette réaction est mise en oeuvre à partir de :
1. une solution aqueuse d'oxysilane fonctionnalisé et de métasilicate de sodium, et
2. une solution de sel(s) de métal(/métaux), préparée avec un ou plusieurs sel(s) de métal (ou de métaux) dans une solution d'acide chlorhydrique ou d'acide acétique.

L'acide chlorhydrique HCl et/ou l'acide acétique est/sont ajouté(s) dans le milieu réactionnel de co-précipitation de façon à ce que le nombre total de moles d'ions chlorures et/ou d'ions acétate (provenant de l'acide chlorhydrique et/ou acétique et du/des sel(s) métallique(s)) ajoutés soit égal au nombre de moles de sodium Na (provenant du métasilicate de sodium).

La préparation de cette composition comprenant des particules minérales synthétiques silico-métalliques est réalisée en suivant le protocole suivant :
1. on mélange les solutions de sel(s) de métal (ou de métaux) avec la solution de trihydroxysilane ou de trialcoxysilane et de métasilicate de sodium ; un hydrogel silico-métallique de co-précipitation se forme instantanément,
2. on agite le gel (par exemple pendant 5 minutes),
3. on récupère l'hydrogel après centrifugation (entre 2000 et 10000 tours par minute, pendant 3 à 20 minutes, par exemple 3500 tours/min pendant 5 minutes) et élimination du surnageant,
4. on lave l'hydrogel avec de l'eau distillée ou osmosée, en effectuant au moins deux cycles de lavage/centrifugation,
5. on récupère l'hydrogel après centrifugation,
6. éventuellement, on sèche l'hydrogel récupéré après centrifugation par exemple par lyophilisation et/ou séchage à l'étuve, par séchage sous irradiation de micro-ondes ou encore par atomisation.

En outre, il est possible d'ajouter, par exemple à la solution de métasilicate de sodium, au moins un sel additionnel tel que du chlorure de sodium NaCl ou encore de l'acétate de sodium CH₃COONa (hydraté ou non). La présence d'un tel sel permet de favoriser la réaction de co-précipitation de l'hydrogel et d'obtenir un hydrogel présentant des propriétés améliorées. Le(s)dit(s) sel(s) peu(ven)t être ajouté(s) de façon à ce que leur concentration dans le milieu réactionnel de co-précipitation de l'hydrogel soit par exemple comprise entre 0,2 mol/L et 4 mol/L.

A l'issue de cette première phase de précipitation, on obtient un hydrogel comprenant des particules minérales synthétiques silico-métalliques présentant des groupements hydrocarbonés.

### 2/ - Echange de X⁻ par un autre anion

La composition obtenue après séchage ou non de l'hydrogel comprenant des particules minérales synthétiques silico-métalliques tel qu'obtenu précédemment peut être ajoutée à une solution aqueuse comprenant par exemple un ion bromure Br⁻, un ion iodure I⁻, un anion bis-trifluorométhanesulfonamide, un anion hexafluorophosphate, un anion tétrafluoroborate, un anion tétrachloroaluminate, un anion acétate, un anion hydroxyde HO⁻, un anion nitrate NO³⁻ et un anion nitrite NO²⁻. La concentration en un de ces anions dans une telle solution est comprise entre 0,1 mol.L et la limite de solubilité de l'espèce chimique, notamment entre 0,2 mol.L⁻¹ et 3 mol.L⁻¹, en particulier entre 0,3 mol.L⁻¹ et 1,5 mol.L⁻¹, par exemple 0,5 mol.L⁻¹. Un tel échange par métathèse permet de moduler à façon le caractère plus ou moins hydrophile ou hydrophobe des particules minérales synthétiques silico-métalliques préparées, l'anion bis-trifluorométhanesulfonamide étant par exemple fortement hydrophobe.

### B/ - ANALYSE ET CARACTERISATION STRUCTURELLE

Les résultats d'analyse d'une composition silico-métallique comprenant des particules minérales synthétiques fonctionnalisées obtenue en suivant le protocole précédemment exposé sont ci-après rapportés.

La composition comprenant des particules minérales synthétiques silico-métalliques a été analysée par Résonance Magnétique Nucléaire (RMN).

La figure 1 représente un spectre en RMN du silicium d'une composition comprenant des particules minérales synthétiques silico-métalliques obtenue par un procédé selon l'invention, réalisé à l'aide d'un spectromètre BRUKER® Avance 400®.

La figure 2 représente un spectre en RMN du carbone d'une composition comprenant des particules minérales synthétiques silico-métalliques obtenue par un procédé selon l'invention, réalisé à l'aide d'un spectromètre BRUKER® Avance 400®.

### Exemple 1 :

Une solution de chlorure de magnésium est préparée en ajoutant 14,07 g de chlorure de magnésium hexahydraté (MgCl₂, 6H₂O) dans 47 mL d'acide chlorhydrique HCl à 1 mol/L.

Une solution d'alcoxysilane fonctionnalisé et de métasilicate de sodium est préparée en ajoutant 5,17 g de chlorure de 1-(triméthoxy-silyl-propyl)-3-méthyl-imidazolium et 15,62 g de métasilicate de sodium pentahydraté dans 200 mL d'eau distillée.

Le chlorure de 1-(triméthoxy-silyl-propyl)-3-méthyl-imidazolium a pour formule chimique développée la formule suivante :

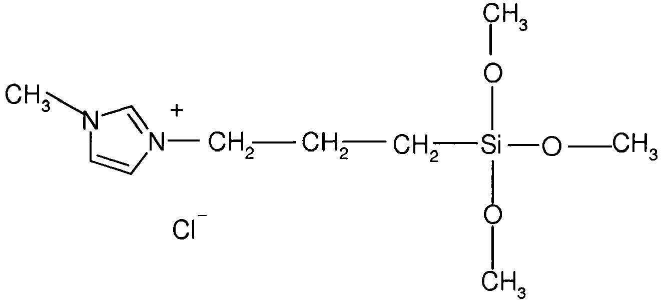

La solution de chlorure de magnésium est rapidement ajoutée à la solution d'alcoxysilane fonctionnalisé et de métasilicate de sodium, un gel silico-métallique se forme instantanément. Ce gel silico-métallique est agité pendant 5 minutes puis centrifugé pendant 5 minutes à 3500 tours/min. Il est ensuite lavé deux fois par ajout de 100 mL d'eau distillée et centrifugation (5 minutes à 3500 tours/min).

Le gel silico-métallique récupéré est ensuite séché par lyophilisation à -50°C sous 0,064 mbar. Après séchage par lyophilisation, une poudre blanche est récupérée. On récupère alors 7,53 g d'une composition comprenant des particules minérales synthétiques fonctionnalisées.

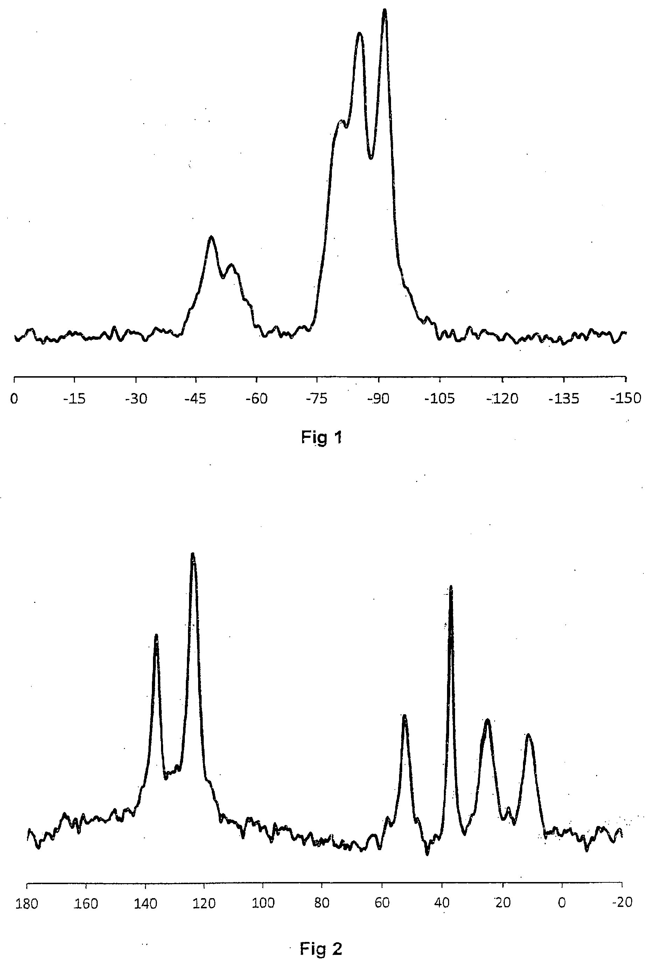

Le spectre en RMN du silicium (figure 1) de ce gel silico-métallique permet d'identifier la présence de groupements Si-O-Si (déplacements chimiques compris entre -75 ppm et -100 ppm) ainsi que la présence de groupements C-Si-O-Si (déplacements chimiques compris entre -40 ppm et -60 ppm).

Le spectre en RMN du carbone (figure 2) de ce gel silico-métallique permet d'identifier la présence d'un groupement imidazolium (déplacements chimiques compris entre 120 ppm et 140 ppm) ainsi que la présence d'un groupement méthyle et de trois groupements méthylènes (déplacements chimiques compris entre 10 ppm et 60 ppm).

Un échange des ions chlorures est ensuite réalisé par métathèse dans une solution aqueuse de bis-trifluorométhanesulfonamidure de lithium préparée en ajoutant 5,55 g de bis-trifluorométhanesulfonamidure de lithium dans 20 mL d'eau distillée. Les ions chlorures sont complètement échangés par les ions bis-trifluorométhanesulfonamidure. Après échange, la composition comprenant des particules minérales synthétiques fonctionnalisées est récupérée après une centrifugation à 4000 tours/min pendant 5 minutes.

### Exemple 2 :

Une solution d'acétate de magnésium est préparée en ajoutant 32,01 g d'acétate de magnésium tétrahydraté (Mg(CH₃COO)₂, 4H₂O), soit 149,26 mmol, dans 99,5 mL d'acide acétique CH₃COOH à 1 mol/L.

Une solution de métasilicate de sodium est préparée en ajoutant 37,9 g de métasilicate de sodium pentahydraté (178,67 mmol) dans 150 mL d'eau distillée. La solution est légèrement chauffée jusqu'à 40°C pour améliorer la dissolution.

Une solution d'alcoxysilane fonctionnalisé est préparée en ajoutant 5,575 g de chlorure de 1-(triméthoxy-silyl-propyl)-3-méthyl-imidazolium (19,85 mmol) dans 20 mL d'eau distillée. On y ajoute ensuite sous agitation magnétique une solution contenant 3,065 g d'iodure de sodium Nal (20,448 mmol) dans 10 mL d'eau distillée, de façon à réaliser un échange entre les ions chlorure Cl⁻ et iodure I⁻. On maintient la solution d'alcoxysilane fonctionnalisé avec l'iodure de sodium Nal sous agitation magnétique pendant 1 minute.

La solution d'alcoxysilane fonctionnalisé ainsi préparée est alors entièrement ajoutée sous agitation magnétique à la solution de métasilicate de sodium précédemment préparée.

Finalement, on ajoute sous agitation magnétique la solution d'acétate de magnésium à la solution contenant l'alcoxysilane fonctionnalisé et le métasilicate de sodium. Un gel silico-métallique se forme instantanément. Ce gel silico-métallique est agité pendant 5 minutes puis centrifugé pendant 5 minutes à 3500 tours/min. Il est ensuite lavé trois fois par ajout de 100 mL d'eau distillée et centrifugation (5 minutes à 3500 tours/min) de façon à éliminer les sels formés au cours de la précipitation.

Le gel silico-métallique récupéré est ensuite séché par lyophilisation à -50°C sous 0,064 mbar. Après séchage par lyophilisation, une poudre blanche est récupérée et séchée dans une étuve à 130°C pendant 2 heures. On récupère alors 29 g d'une composition comprenant des particules minérales synthétiques fonctionnalisées, c'est-à-dire dont environ 10% (pourcentage atomique) des atomes de silicium sont porteurs de groupements A de formule suivante :

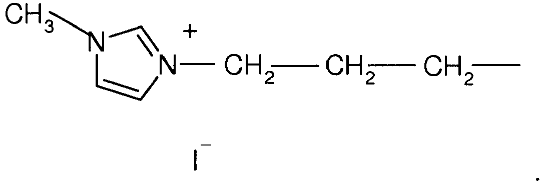

Les particules minérales synthétiques fonctionnalisées récupérées après séchage du gel silico-métallique ont donc pour formule (Si*_{0.9}*(Si-A)*_{0.1}*)₄Mg₃O₁₁, n'H₂O ; n'étant relatif à un nombre de molécule(s) d'eau associée(s) auxdites particules.

### Exemple 3 :

Une solution d'acétate de magnésium est préparée en ajoutant 18,07 g d'acétate de magnésium tétrahydraté (Mg(CH₃COO)₂, 4H₂O), soit 84,79 mmol, dans 57 mL d'acide acétique CH₃COOH à 1 mol/L.

Une solution d'alcoxysilane fonctionnalisé et de métasilicate de sodium est préparée en ajoutant 4,99 g de triéthoxy amino-propyl silane (22,55 mmol) puis 19,14 g de métasilicate de sodium pentahydraté (90,22 mmol) dans 400 mL d'eau distillée.

Le chlorure de triéthoxy amino-propyl silane a pour formule chimique développée la formule suivante :

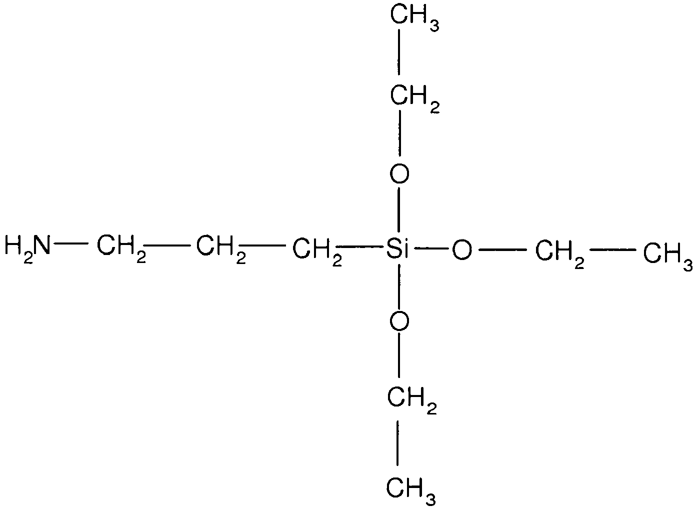

La solution d'acétate de magnésium est rapidement ajoutée à la solution d'alcoxysilane fonctionnalisé et de métasilicate de sodium, un gel silico-métallique se forme instantanément. Ce gel silico-métallique est agité pendant 5 minutes puis centrifugé pendant 5 minutes à 4000 tours/min. Il est ensuite lavé deux fois par ajout de 100 mL d'eau distillée et centrifugation (5 minutes à 3500 tours/min).

Le gel silico-métallique récupéré est ensuite séché par lyophilisation à -50°C sous 0,064 mbar. Après séchage par lyophilisation, une poudre blanche est récupérée. On récupère alors 12,8 g d'une composition comprenant des particules minérales synthétiques fonctionnalisées, c'est-à-dire dont environ 20% (pourcentage atomique) des atomes de silicium sont porteurs de groupements A amino-propyles.

Le spectre en RMN du silicium (non représenté) de ce gel silico-métallique permet d'identifier la présence de groupements Si-O-Si (déplacements chimiques compris entre -75 ppm et -100 ppm) ainsi que la présence de groupements C-Si-O-Si (déplacements chimiques compris entre -40 ppm et -60 ppm).

Le spectre en RMN du carbone (non représenté) de ce gel silico-métallique permet d'identifier la présence d'un groupement H₂N-CH₂- (déplacements chimiques autour de 42,2 ppm), d'un groupement N-CH₂-CH₂-CH₂-Si (déplacements chimiques autour de 24,4 ppm) et d'un groupement CH₂-Si (déplacements chimiques autour de 10,6 ppm).

Les particules minérales synthétiques fonctionnalisées récupérées après séchage du gel silico-métallique ont donc pour formule (Si*_{0.75}*(Si-A)_{*0*,*25*})₄Mg₃O₁₁, n'H₂O ; n' étant relatif à un nombre de molécule(s) d'eau associée(s) auxdites particules.

### Exemple 4 :

Une solution d'acétate de zinc est préparée en ajoutant 20,59 g d'acétate de zinc dihydraté (Zn(CH₃COO)₂, 2H₂O), soit 93,80 mmol, dans 63,0 mL d'acide acétique à 1 mol/L.

Une solution de métasilicate de sodium est préparée en ajoutant 21,17 g de métasilicate de sodium pentahydraté, soit 90,22 mmol, dans 200 mL d'eau distillée.

Une solution d'alcoxysilane fonctionnalisé est ensuite préparée en ajoutant 7,007 g de chlorure de 1-(triméthoxy-silyl-propyl)-3-méthyl-imidazolium, soit 22,55 mmol, dans 30 mL d'eau distillée. On y ajoute ensuite sous agitation magnétique 2,7 g de bromure de sodium NaBr, soit 26,2 mmol, de façon à réaliser un échange entre les ions chlorure Cl⁻ et bromure Br⁻. On maintient la solution d'alcoxysilane fonctionnalisé avec le bromure de sodium NaBr sous agitation magnétique pendant 1 minute.

La solution d'alcoxysilane fonctionnalisé ainsi préparée est alors entièrement ajoutée sous agitation magnétique à la solution de métasilicate de sodium précédemment préparée.

Finalement, on ajoute sous agitation magnétique la solution d'acétate de zinc à la solution contenant l'alcoxysilane fonctionnalisé et le métasilicate de sodium. Un gel silico-métallique se forme instantanément. Ce gel silico-métallique est agité pendant 5 minutes puis centrifugé pendant 5 minutes à 3500 tours/min. Il est ensuite lavé trois fois par ajout de 100 mL d'eau distillée et centrifugation (5 minutes à 5000 tours/min) de façon à éliminer les sels formés au cours de la précipitation.

Le gel silico-métallique récupéré est ensuite séché par lyophilisation à -50°C sous 0,064 mbar. Après séchage par lyophilisation, une poudre blanche est récupérée et séchée dans une étuve à 130°C pendant 2 heures. On récupère alors 20,40 g d'une composition comprenant des particules minérales synthétiques fonctionnalisées, c'est-à-dire dont environ 20% (pourcentage atomique) des atomes de silicium sont porteurs de groupements A de formule suivante :

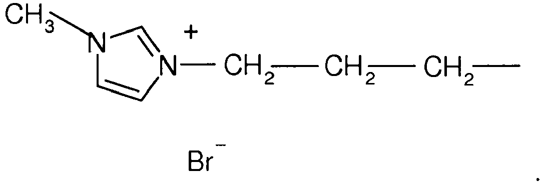

Le spectre en RMN du silicium (non représenté) de ce gel silico-métallique permet d'identifier la présence de groupements Si-O-Si (déplacements chimiques autour de -88,5 ppm et -97,7 ppm) ainsi que la présence de groupements C-Si-O-Si (déplacements chimiques autour de -57 ppm).

Le spectre en RMN du carbone (non représenté) de ce gel silico-métallique permet d'identifier la présence d'un groupement imidazolium (déplacements chimiques compris entre 120 ppm et 140 ppm) ainsi que la présence d'un groupement méthyle et de trois groupements méthylènes (déplacements chimiques compris entre 10 ppm et 60 ppm).

Les particules minérales synthétiques fonctionnalisées récupérées après séchage du gel silico-métallique ont donc pour formule (Si*_{0.75}*(Si-A)*_{0,25}*)₄Zn₃O₁₁, n'H₂O ; n'étant relatif à un nombre de molécule(s) d'eau associée(s) auxdites particules.

## Revendications

1. Procédé de préparation d'un hydrogel comprenant des particules minérales silico-métalliques de formule (Si*ₓ*CSi-A)*₁₋ₓ*)₄M₃O₁₁, n'H₂O dans laquelle :
- x est un nombre réel de l'intervalle [0,75 ; 1[,
- A désigne un groupement choisi parmi un méthyle et les groupements hydrocarbonés comprenant au moins un hétéroatome,
- M est un métal choisi dans le groupe formé du magnésium, du cobalt, du zinc, du cuivre, du manganèse, du fer, du nickel et du chrome,
- n' est relatif à un nombre de molécule(s) d'eau associée(s) audit hydrogel,
dans lequel on réalise une réaction de co-précipitation en milieu aqueux entre :
- au moins un sel métallique dudit métal M,
- du métasilicate de sodium Na₂OSiO₂, et
- au moins un oxysilane soluble dans l'eau et ayant pour formule (I): 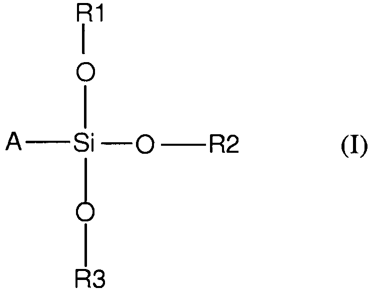 dans laquelle R1, R2 et R3, sont identiques ou différents, et choisis parmi un hydrogène et les groupements alkyles linéaires comprenant 1 à 3 atome(s) de carbone.

2. Procédé selon la revendication 1, **caractérisé en ce que** le groupement A a pour formule (II) : 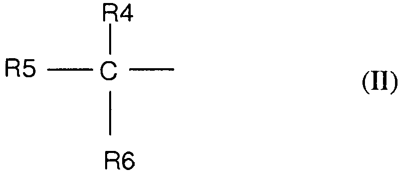 dans laquelle R4, R5 et R6, sont identiques ou différents, et choisis parmi H- et les groupements hydrocarbonés comprenant au moins un hétéroatome.

3. Procédé selon l'une des revendications 1 et 2, **caractérisé en ce que** dans la formule (I), A est choisi parmi un méthyle et les groupements hydrocarbonés de formule Y-[CH₂]ₙ- dans laquelle :
- Y est un groupement comprenant au moins un atome d'azote,
- n est un nombre entier compris entre 3 et 11.

4. Procédé selon la revendication 3, **caractérisé en ce que** Y est choisi parmi H₂N- et 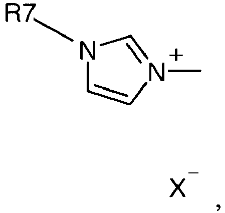
- R7 étant choisi parmi les alkyles linéaires et ramifiés comprenant 1 à 18 atome(s) de carbone,
- X⁻ est un anion dans lequel X est choisi parmi le chlore, l'iode et le brome.

5. Procédé selon l'une des revendications 1 à 4, **caractérisé en ce que** ledit oxysilane a pour formule : 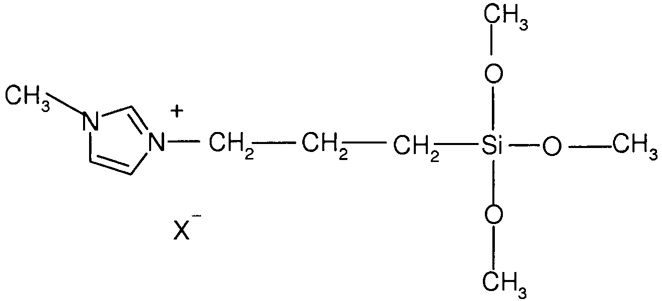 dans laquelle X⁻ est un anion dans lequel X est choisi parmi le chlore, l'iode et le brome.

6. Procédé selon l'une des revendications 1 à 5, **caractérisé en ce que** ledit sel métallique, ledit métasilicate de sodium et ledit oxysilane sont mis en présence de façon à ce que le rapport atomique entre le métal M et le silicium soit sensiblement égal à 0,75.

7. Procédé selon l'une des revendications 1 à 6, **caractérisé en ce que** le rapport molaire entre ledit oxysilane et ledit métasilicate de sodium est compris entre 0,10 et 0,34.

8. Procédé selon l'une des revendications 1 à 7, **caractérisé en ce que** ledit sel métallique est choisi parmi les chlorures métalliques de formule MCl₂ et les acétates métalliques de formule M(CH₃COO)₂.

9. Procédé selon l'une des revendications 1 à 8, **caractérisé en ce qu'**on ajoute, dans le milieu réactionnel de co-précipitation, au moins un acide choisi parmi l'acide chlorhydrique et l'acide acétique, le nombre total de moles d'ions chlorures et d'ions acétate étant égal au nombre de moles de sodium Na dans ledit milieu réactionnel de co-précipitation.

10. Procédé selon l'une des revendications 4 et 5 et selon l'une des revendications 1 à 9, **caractérisé en ce qu'**on réalise un échange au moins partiel de l'anion X⁻ par au moins une espèce anionique choisie parmi un anion bis-trifluorométhanesulfonamide, un anion trifluorométhanesulfonate, un anion hexafluorophosphate, un anion tétrafluoroborate, un anion tétrachloroaluminate, un anion acétate, un anion hydroxyde HO⁻, un anion nitrate NO³⁻ et un anion nitrite NO²⁻.

11. Hydrogel de formule (Si*ₓ*(Si-A)*₁₋ₓ*)₄M₃O₁₁, n'H₂O dans laquelle :
- x est un nombre réel de l'intervalle [0,75 ; 1[,
- A désigne un groupement choisi parmi un méthyle et les groupements hydrocarbonés comprenant au moins un hétéroatome,
- M est un métal choisi dans le groupe formé du magnésium, du cobalt, du zinc, du cuivre, du manganèse, du fer, du nickel et du chrome,
- n' est relatif à un nombre de molécule(s) d'eau associée(s) audit hydrogel.

12. Hydrogel selon la revendication 11, **caractérisé en ce qu'**il est obtenu par un procédé selon l'une des revendications 1 à 10.

## Patentansprüche

1. Verfahren zur Herstellung eines Hydrogels, umfassend Siliziummetall-Mineralpartikel mit der Formel (Siₓ(Si-A)_{*1*-*x*})₄M₃O₁₁, n'H₂O, wobei :
- x eine reelle Zahl des Intervalls [0,75; 1[ ist,
- A eine Einheit bezeichnet, ausgewählt aus einem Methyl und die Kohlenwasserstoffeinheiten, umfassend mindestens ein Heteroatom,
- M ein Metal ist, ausgewählt aus der Gruppe, bestehend aus Magnesium, Kobalt, Zink, Kupfer, Mangan, Eisen, Nickel und Chrom,
- n' relativ zu einer Anzahl von Wassermolekül(en) ist, das/die mit dem Hydrogel assoziiert ist/sind,
wobei eine Copräzipitationsreaktion in einem wässrigen Medium durchgeführt wird zwischen:
- mindestens einem Metallsalz des Metalls M,
- Natriummetasilikat Na₂OSiO₂ und
- mindestens einem Oxysilan, das in Wasser löslich ist und die folgende Formel (I) aufweist: 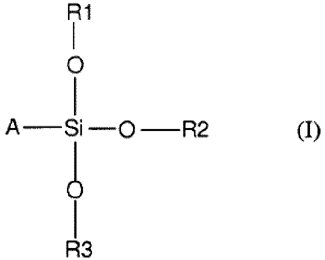 wobei R1, R2 und R3 identisch oder verschieden sind und ausgewählt aus einem Wasserstoff und den linearen Alkyleinheiten, umfassend 1 bis 3 Kohlenstoffatom (e) .

2. Verfahren nach Anspruch 1, **dadurch gekennzeichnet, dass** die Einheit A die Formel (II) aufweist: 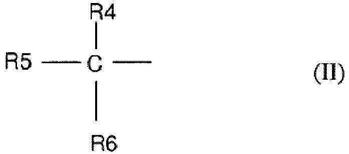 wobei R4, R5 und R6 identisch oder verschieden sind, ausgewählt aus H und den Kohlenwasserstoffeinheiten, umfassend mindestens ein Heteroatom.

3. Verfahren nach einem der Ansprüche 1 und 2, **dadurch gekennzeichnet, dass** in der Formel (I) A ausgewählt ist aus einem Methyl und den Kohlenwasserstoffeinheiten mit der Formel Y-[CH₂]ₙ-, wobei:
- Y eine Einheit ist, umfassend mindestens ein Stickstoffatom,
- n eine ganze Zahl zwischen 3 und 11 ist.

4. Verfahren nach Anspruch 3, **dadurch gekennzeichnet, dass** Y ausgewählt ist aus H₂N⁻ und 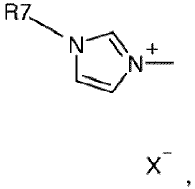
- R7 ausgewählt ist aus den linearen und verzweigten Alkylen, umfassend 1 bis 18 Kohlenstoffatom(e),
- X⁻ ein Anion ist, wobei X ausgewählt ist aus Chlor, Iod und Brom.

5. Verfahren nach einem der Ansprüche 1 bis 4, **dadurch gekennzeichnet, dass** das Oxysilan die folgende Formel aufweist: 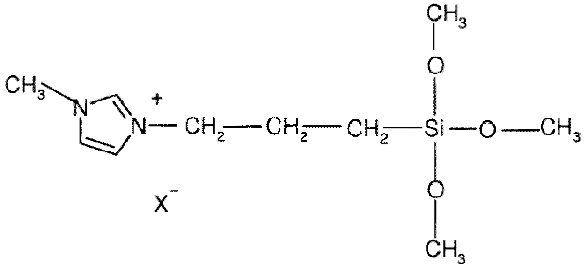 wobei X⁻ ein Anion ist, wobei X ausgewählt ist aus Chlor, Iod und Brom.

6. Verfahren nach einem der Ansprüche 1 bis 5, **dadurch gekennzeichnet, dass** das Metallsalz, das Natriummetasilikat und das Oxysilan derart gegenüber gestellt werden, dass das Atomverhältnis zwischen dem Metall M und dem Silizium im Wesentlichen gleich 0,75 ist.

7. Verfahren nach einem der Ansprüche 1 bis 6, **dadurch gekennzeichnet, dass** das Molverhältnis zwischen dem Oxysilan und dem Natriummetasilikat zwischen 0,10 und 0,34 liegt.

8. Verfahren nach einem der Ansprüche 1 bis 7, **dadurch gekennzeichnet, dass** das Metallsalz ausgewählt ist aus den Metallchloriden mit der Formel MCl₂ und den Metallacetaten mit der Formel M(CH₃COO)₂.

9. Verfahren nach einem der Ansprüche 1 bis 8, **dadurch gekennzeichnet, dass** dem Copräzipitations-Reaktionsmedium mindestens eine Säure zugegeben wird, ausgewählt aus der Chlorwasserstoffsäure und der Essigsäure, wobei die Gesamtzahl der Mole von Chloridionen und Azetationen gleich der Anzahl der Mole von Natrium Na in dem Copräzipitations-Reaktionsmedium ist.

10. Verfahren nach einem der Ansprüche 4 und 5 und nach einem der Ansprüche 1 bis 9, **dadurch gekennzeichnet, dass** ein mindestens teilweiser Austausch des Anions X⁻ durch mindestens eine anionische Spezies durchgeführt wird, ausgewählt aus einem bis-Trifluormethansulfonamidanion, einem Trifluormethansulfonatanion, einem Hexafluorphosphatanion, einem Tetrafluorboratanion, einem Tetrachloraluminatanion, einem Acetatanion, einem Hydroxidanion HO⁻, einem Nitratanion NO³⁻ und einem Nitritanion NO²⁻.

11. Hydrogel mit der Formel (Siₓ(Si-A)_{*1*-*x*})₄M₃O₁₁, n'H₂O, wobei:
- x eine reelle Zahl des Intervalls [0,75; 1[ ist,
- A eine Einheit bezeichnet, ausgewählt aus einem Methyl und die Kohlenwasserstoffeinheiten, umfassend mindestens ein Heteroatom,
- M ein Metal ist, ausgewählt aus der Gruppe, bestehend aus Magnesium, Kobalt, Zink, Kupfer, Mangan, Eisen, Nickel und Chrom,
- n' relativ zu einer Anzahl von Wassermolekül(en) ist, das/die mit dem Hydrogel assoziiert ist/sind.

12. Hydrogel nach Anspruch 11, **dadurch gekennzeichnet, dass** es durch ein Verfahren nach einem der Ansprüche 1 bis 10 erhalten wird.

## Claims

1. A method for preparing a hydrogel comprising silico-metallic mineral particles of the formula (Siₓ(Si-A)₁₋ₓ)₄M₃O₁₁·n'H₂O, in which:
- x is a real number in the range [0.75; 1],
- A denotes a group selected from methyl and hydrocarbon groups comprising at least one heteroatom,
- M is a metal selected from the group consisting of magnesium, cobalt, zinc, copper, manganese, iron, nickel and chromium,
- n' refers to a number of water molecules associated with said hydrogel,
wherein a coprecipitation reaction is carried out in an aqueous medium between:
- at least one metal salt of said metal M,
- sodium metasilicate, Na₂OSiO₂, and
- at least one water-soluble oxysilane of formula (I): 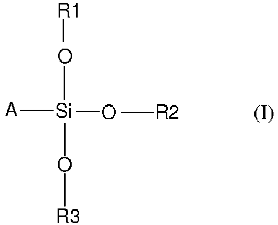 in which R1, R2 and R3 are identical or different and are selected from hydrogen and linear alkyl groups comprising 1 to 3 carbon atoms.

2. Method according to claim 1, **characterized in that** the group A has formula (II): 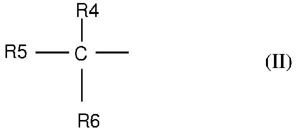 in which R4, R5 and R6 are identical or different and are selected from H and hydrocarbon groups comprising at least one heteroatom.

3. Method according to one of claims 1 and 2, **characterized in that**, in formula (I), A is selected from methyl and hydrocarbon groups of the formula Y-[CH₂]ₙ-, in which:
- Y is a group comprising at least one nitrogen atom,
- n is an integer between 3 and 11.

4. Method according to claim 3, **characterized in that** Y is selected from H₂N- and 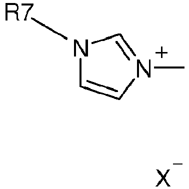 in that:
- R7 is selected from linear and branched alkyls comprising 1 to 18 carbon atoms,
- X⁻ is an anion in which X is selected from chlorine, iodine and bromine.

5. Method according to one of claims 1 to 4, **characterized in that** said oxysilane has the formula: 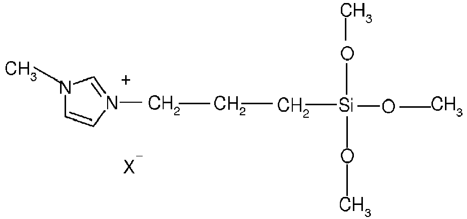 wherein X⁻ is an anion wherein X is selected from chlorine, iodine and bromine.

6. Method according to one of claims 1 to 5, **characterized in that** said metal salt, said sodium metasilicate and said oxysilane are brought together in such a way that the atomic ratio between the metal M and the silicon is substantially equal to 0.75.

7. Method according to one of claims 1 to 6, **characterized in that** the molar ratio between said oxysilane and said sodium metasilicate is between 0.10 and 0.34.

8. Method according to one of claims 1 to 7, **characterized in that** said metal salt is selected from metal chlorides of the formula MCl₂ and metal acetates of the formula M(CH₃COO)₂.

9. Method according to one of claims 1 to 8, **characterized in that** at least one acid selected from hydrochloric acid and acetic acid is added to the coprecipitation reaction medium, the total number of moles of chloride ions and acetate ions being equal to the number of moles of sodium, Na, in said coprecipitation reaction medium.

10. Method according to one of claims 4 and 5 and according to one of claims 1 to 9, **characterized in that** the anion X⁻ is at least partially exchanged with at least one anionic species selected from a bistrifluoromethanesulfonamide anion, a trifluoromethanesulfonate anion, a hexafluorophosphate anion, a tetrafluoroborate anion, a tetrachloroaluminate anion, an acetate anion, a hydroxide anion, HO⁻, a nitrate anion, NO₃⁻, and a nitrite anion, NO₂⁻.

11. A hydrogel of the formula (Siₓ(Si-A)₁₋ₓ)₄M₃O₁₁·n'H₂O, in which:
- x is a real number in the range [0.75; 1],
- A denotes a group selected from methyl and hydrocarbon groups comprising at least one heteroatom,
- M is a metal selected from the group consisting of magnesium, cobalt, zinc, copper, manganese, iron, nickel and chromium,
- n' refers to a number of water molecules associated with said hydrogel.

12. Hydrogel according to claim 11 which is obtained by a method according to one of claims 1 to 10.
